# EUROPÄISCHE PATENTSCHRIFT

(11) **EP 2 512 721 B1**
(45) Veröffentlichungstag und Bekanntmachung des Hinweises auf die Patenterteilung: **27.07.2016**
(21) Anmeldenummer: 10803228.5
(22) Anmeldetag: 16.12.2010
(51) Int. Cl.: B23K 11/22, B23K 11/30, B21D 24/16, B23D 31/00

(54) **VERFAHREN UND VORRICHTUNG ZUM TRENNEN EINES BAUTEILS UNTER VERWENDUNG VON GEKÜHLTEN ELEKTRODEN**
METHOD OF AND DEVICE FOR SEVERING A COMPONENT USING COOLED ELECTRODES
PROCÉDÉ ET DISPOSITIF POUR SÉPARER UN ÉLÉMENT AU MOYEN D'ÉLECTRODES REFROIDIES

(30) Priorität: 18.12.2009 DE 102009060311; 30.12.2009 DE 102009060878
(43) Veröffentlichungstag der Anmeldung: 24.10.2012
(73) Patentinhaber: Gottfried Wilhelm Leibniz Universität Hannover, 30167 Hannover (DE)
(72) Erfinder: BEHRENS, Bernd-Arno, 31177 Harsum (DE); HÜBNER, Sven, 31535 Neustadt (DE); DEMIR, Murat, 30851 Langenhagen (DE)
(74) Vertreter: Gerstein, Hans Joachim
(86) Internationale Anmeldenummer: PCT/EP2010/007660
(87) Internationale Veröffentlichungsnummer: WO 2011/072847

(56) Entgegenhaltungen:
- EP-A1- 0 001 557
- JP-A- 2007 118 014
- DATABASE WPI Week 199501 Thomson Scientific, London, GB; AN 1995-004343 XP002631609, -& SU 1 825 697 A1 (ODESS HEAVY CRANE PRODN ASSOC) 7. Juli 1993 (1993-07-07)

## Beschreibung

Die Erfindung betrifft ein Verfahren zum Trennen eines Bauteils entlang einer Trennlinie und eine Trennvorrichtung für ein entlang einer Trennlinie zu trennendes Bauteil gemäß dem Oberbegriff der Ansprüche 1 und 8 (siehe, z.B., SU 1825697 A1).

Bekannt sind Verfahren zum Trennen eines Bauteils wie das Scherschneiden. Dabei wird ein Blechbauteil mittels zweier zueinander beweglicher Werkzeugkomponenten getrennt.

Nachteilig beim Scherschneiden ist, dass es für Blechbauteile aus dickem höchstfesten Blech, wie beispielsweise Vergütungsstahl, aufgrund des großen Schnittschlags ungeeignet ist. Solche höchstfesten Blechbauteile, die meist mittels Presshärten hergestellt werden, werden beispielsweise im Fahrzeugbau zunehmend eingesetzt, um die Crashsicherheit zu steigern und den Werkstoffleichtbau mit höchstfestem Stahl umzusetzen. Beispielbauteile in nahezu allen aktuellen PKW-Karosserien sind B-Säulen, Dachrahmen, Türaufprallträger, Schweller und Tunnel. Beim Presshärten, auch Formhärten genannt, wird der Umformvorgang mit einer Wärmebehandlung der Platinen in einem Prozess kombiniert. Neben einer guten Umformbarkeit sind sehr hohe Bauteilfestigkeiten von größer 1.500 MPa sowie eine geringe Rückfederungsneigung und damit eine hohe Maßhaltigkeit realisierbar. Die pressgehärteten Bauteile müssen an ihren Rändern beschnitten werden, um die gewünschte Bauteilgeometrie zu erzielen. Da das Scherschneiden nicht in Betracht kommt, werden die Bauteile mittels Laser beschnitten. Dies ist sehr aufwändig und kostenträchtig, da dieser Prozess mit bis zu 90 s deutlich langsamer abläuft, als der vorangehende Fertigungsprozess der Blechteileherstellung mit ca. 8 - 15 s. Die Folge ist, dass die Teile zwischen Fertigung und Laserbeschnitt zusätzlich gestapelt, eingelagert und wieder vereinzelt und dem Laser zugeführt werden müssen. Weiterhin sind Laserschneidanlagen erforderlich, die mit zusätzlichen Investitionen verbunden sind. Darüber hinaus fallen für das relativ langsame Laserbeschneiden erhöhte Maschinenstunden an, wodurch sich der Gesamtprozess zusätzlich verteuert.

Nachteilig bei den Scherschneidverfahren ist zudem, dass am Bauteil ein scharfkantiger Grat entstehen kann, was insbesondere dann unerwünscht ist, wenn der Grat in Kontakt mit empfindlichen Bauteilen, wie beispielsweise Dichtungen, kommt.

Cord Schäffner: "Konduktive Erwärmung für die Warmblechumformung", Dissertation, Leibniz Universität Hannover, Institut für Umformtechnik, Berichte aus dem IFUM, Garbsen: PZH, Produktionstechn Zentrum, Band 4, 2009 beschreibt die Methode des Presshärtens mit einer konduktiven Erwärmung der Platine vor der Umformung.

Ein Verfahren und eine Vorrichtung zur konduktiven Erwärmung von Metallblechen ist beispielsweise in der DE 10 2006 037 637 A1 offenbart.

DE 976 250 C beschreibt ein Verfahren zum kontinuierlichen Schneiden von Flachmaterial durch Leiten von Strom entlang von Rändern eines V-förmigen Einschnitts und Aufschmelzen der Spitze des Einschnitts.

DE 38 35 786 A1 offenbart ein Gerät zum Widerstandstrennen von metallenem Strangmaterial, d.h. von Drähten, Stahlseilen und Litzen. Das Strangmaterial wird an Spannbacken mit Spanndruckfedern eingespannt. Der Spannbackenabstand ist einstellbar.

DE 10 2008 031 222 B4 offenbart eine Trennvorrichtung mit mindestens zwei durch einen Trennspalt voneinander beabstandeten Elektroden zum konduktivem Trennen eines mit den Elektroden im elektrisch leitenden Kontakt stehenden Bauteils. Ein Problem ist das Anhaften von Schmelze mit den Elektroden.

JP 2007-118014 A offenbart eine Umformpresse mit gegenüberliegenden Elektrodenpaaren zur lokalen Erwärmung des umzuformenden Bauteils.

EP 0 001 557 A1 offenbart ein Verfahren zum Trennen eines eine Vielzahl von Drähten aufweisenden Seils, das in zwei voneinander beabstandeten Kontaktblöcken eingespannt ist. Die Kontaktblöcke bilden ein Elektrodenpaar und haben Kühlkanäle für die Zu- und Abfuhr eines Kühlmittels. Zur Vermeidung des Anbackens von Metallspritzern und zur guten Kontaktgabe sind die Kontaktblöcke aus einem Sinter-Metall-Kontaktwerkstoff gebildet.

Der Erfindung liegt die Aufgabe zugrunde, Nachteile im Stand der Technik zu überwinden und insbesondere das Anhaften von aufgeschmolzenem Material des Bauteils mit den Elektroden zu verhindern.

Die Erfindung löst das Problem durch ein Verfahren zum Trennen eines Bauteils entlang einer Trennlinie gemäß Anspruch 1, mit den Schritten:
(a) Anordnen des Bauteils und mindestens eine erste Elektrode in Kontakt zueinander, so dass das Bauteil von einer ersten Seite entlang einer Trennlinie in elektrisch leitendem Kontakt zu der mindestens einen ersten Elektrode steht, und Anordnen des Bauteils und mindestens eine zweite Elektrode in Kontakt zueinander, so dass das Bauteil von einer zweiten Seite entlang der Trennlinie in elektrisch leitendem Kontakt zu der mindestens zweiten Elektrode steht,
(b) Leiten eines elektrischen Stroms von der mindestens einen ersten Elektrode durch das Bauteil in die mindestens eine zweite Elektrode, so dass das Bauteil entlang der Trennlinie schmilzt und getrennt wird, und
(c) Durchströmen der Elektroden mit Kühlmittel, wobei das Problem des Anhaftens von geschmolzenem Material an den Elektroden dadurch reduziert wird, dass der elektrische Strom nicht über die an die Trennlinie angrenzenden Kanten der Elektroden geführt wird. Hierzu sind dieses Kanten elektrisch isoliert, so dass der elektrische Strom aus mindestens einer der Elektroden über eine an eine solche elektrisch isolierte Kante der Elektrode angrenzende, elektrisch leitfähige Anlagefläche der Elektrode in das Bauteil herum und durch die Trennlinie hindurch an mindestens einer weiteren elektrisch isolierten Kante mindestens einer weiteren Elektrode vorbei in die mindestens eine jeweils an eine solche elektrisch isolierte Kante angrenzende, elektrisch leitende Anlagefläche der weiteren Elektroden hineingeführt wird.

Trotzdem treten an den Stromeinleitstellen erhöhte Stromdichten auf, die jetzt allerdings im vollständig gekühlten Bereich liegen. Somit ist eine lokale Erwärmung ausgeschlossen und es kommt nicht zum Verbinden von Blech bzw. Schmelzen mit den Elektroden.

Durch die elektrische Isolation der Kanten wird eine erhöhte Stromdichte an den Kanten, die an die Trennlinie und damit die Schmelzzonen unmittelbar angrenzen, verhindert. Dies hat zur Folge, dass der Schmelzpunkt von den Kanten weg gedrängt wird und damit die Gefahr des Anhaftens von Schmelze an den Elektroden erheblich reduziert wird.

Weiterhin wird das Problem durch eine Trennvorrichtung mit den Merkmalen des Anspruchs 8 gelöst.

Die Kühlung der Elektroden dient nicht nur einfach nur zur Abführung der in den Elektroden entstehenden Wärme. Vielmehr wird die Kühlung der Elektroden zur gezielten partiellen Beeinflussung des Wärmehaushalts in dem Gesamtsystem Werkzeug-Bauteil eingesetzt. Die Kühlkanäle der Elektroden sind so bemessen, dass zusammen mit der Elektrodengeometrie und Elektrodenanordnung eine partielle Kühlung des angrenzenden Bauteils erfolgt, so dass eine gezielte Steuerung des aufzuschmelzenden Bereichs entsteht. Es erfolgt eine Kühlung der partiellen Elektrodenauflage bzw. Elektrodenbeschichtung durch Wärmeleitung, so dass dieser Bereich gezielt zur partiellen Bauteilkühlung dient. Die Folgen der durch die gekühlten Elektroden erzeugten partiellen Bauteilkühlung sind:
a) das Aufschmelzen des Bauteils entsteht im vorgegebenen, nichtgekühlten Bauteilbereich;
b) der Strom durchfließt im Bauteil warme und kalte Bereiche hintereinander. Folglich ist bei der Reihenschaltung (Kaltbereich-Warmbereich-Kaltbereich des Bauteils) die Stromstärke konstant. Allerdings sind die warmen Bauteilbereiche hochohmiger als die kalten Bauteilbereiche. Somit entfällt mehr Spannung und damit mehr Leistung auf die warmen Bereiche, wodurch sich die Aufschmelzzone weiter erwärmt und sich lagegenau in dem durch die Elektrodenkühlung vorgegebenen Bereich befindet;
c) es kommt nicht zu einem Verbinden von Blech bzw. Schmelze mit den Elektroden, da sich die Elektrodenbereiche größter Stromdichten im vollständig gekühlten Bauteilbereich befinden;
d) es wird eine örtliche Begrenzung der Wärmeeinflusszone im Trennbereich des Bauteils und dadurch eine gezielte Gefügesteuerung mit dem Ziel bewirkt, dass der Trennkante spezielle Eigenschaften verliehen werden (Zugfestigkeit, Duktilität, Schwingfestigkeit);

Darüber hinaus lassen sich gekrümmte und besonders lange Elektroden gut herstellen, wenn diese segmentiert ausgeführt werden. Neben der Einsparung von Fertigungskosten sind segmentierte Ausführungen von Kühlbohrungen sinnvoll, da keine gekrümmten Bohrungen ausgeführt werden können und die Bohrungstiefen fertigungstechnisch begrenzt sind. In jedem einzelnen Segment würden die Bohrungen für die Kühlkanäle dann gerade verlaufen.

Vorteilhaft an der Erfindung ist, dass neben durch Scherschneiden trennbaren elektrisch leitfähigen Bauteilen auch hochfeste Bauteile schnell getrennt werden können. Beispielsweise ist es möglich, eine mittels Presshärten hergestellte B-Säule eines Personenkraftwagens in weniger als 2 bis 3 Sekunden an ihrem Rand so zu trennen, dass der überschüssige Abschnitt entfernt wird. Die erfindungsgemäße Möglichkeit, ein Bauteil zu trennen, ist je nach Größe des Bauteils um mehr als das Zehnfache schneller als ein Zerschneiden mittels Laserstrahl.

Das erfindungsgemäße konduktive Trennverfahren ermöglicht die Trennung von Bauteilabschnitten in der Taktzeit der Teilefertigung, z.B. direkt im Anschluss eines Umformverfahrens. Das Trennen kann z. B. direkt im Anschluss an das Umformen bei noch geschlossenem Werkzeug mit Hilfe von in dem Umformwerkzeug eingebauten Elektroden erfolgen. Denkbar ist aber auch eine Überführung des Bauteils aus dem Umformwerkzeug in ein benachbartes Trennwerkzeug in derselben Umformpresse oder in einer separaten Trennpresse. Durch Kühlung der Elektroden wird ein Anhaften von aufgeschmolzenem Material des Bauteils verhindert, da die Schmelzzone von den Elektroden weg weitgehend in das Zentrum der Trennlinie gedrängt wird.

Vorteilhaft ist zudem der geringe Energieverbrauch beim Trennen des Bauteils. Anders als beim Trennen mittels Laserstrahl treten nämlich im Wesentlichen keine Umwandlungsverluste durch Energieumwandlung auf.

Ein weiterer wichtiger Vorteil ist, dass der Rand des fertigen Bauteils im Wesentlichen gratfrei ist. Beim Zerteilen des Bauteils schmilzt das Bauteil nämlich jeweils lokal entlang der Trennlinie auf. Es bildet sich eine abgerundete, stumpfe Kante und es werden scharfe Kanten, die z.B. beim Scherschneiden durch Kerbwirkung und Mikrorisse auftreten können, vermieden.

Zudem ist der Schnitt breiter als beim Laserschneiden, so dass der abgetrennte Abschnitt nicht mit dem restlichen Bauteil verklemmt und freigeschnitten werden muss.

Vorteilhaft ist zudem die hohe Prozesssicherheit beim Trennen des Bauteils. So müssen lediglich wenige Komponenten bewegt werden, um das Trennen des Bauteils zu bewirken.

Vorteilhaft ist zudem die hohe Genauigkeit, mit der das Bauteil getrennt werden kann.

Im Rahmen der vorliegenden Beschreibung wird unter dem Bauteil insbesondere ein flächiges, aber auch ein rohrförmiges Bauteil verstanden. Das Bauteil kann ein durch Urformen (z.B. Gießen oder Schmieden) hergestelltes Halbzeug (z.B. eine Blech-Platine), ein durch Umformen (z.B. Presshärten) in eine gewünschte Kontur gebrachtes Bauteil, oder ein durch Fügen aus mehreren Teilen zusammengesetztes Bauteil (z.B. eine Sandwichstruktur mit zwei oder mehr flächig aufeinander liegenden Materiallagen) sein. Das Bauteil kann beispielsweise ein ein- oder mehrlagiges Blechbauteil sein.

In der Praxis werden nicht nur die Elektroden als Auflager für das Bauteil genutzt. In der Regel ist noch gegenüberliegend von einer Elektrode und direkt angrenzend an die Trennlinie mindestens ein Auflager vorhanden, das elektrisch neutral ist. Diese Auflager sind vorzugsweise geerdet und mit Massenpotential verbunden. Um ein Anhaften von Schmelze auch an den Auflagern zu verhindern, sollten diese mindestens auf der Lagefläche zum Bauteil elektrisch isoliert (beschichtet) sein. Vorteilhaft ist eine vollständige elektrische Isolierung der Auflager, um unvermeidbar induzierte Wirbelströme zu minimieren, die zu einer Erwärmung der Auflager führen können. Selbstverständlich können die Auflager sowie angrenzende Werkzeugkomponenten auch mit Kühlmittel durchströmt werden.

Besonders vorteilhaft ist es zudem, wenn die Elektroden und ggf. die angrenzenden Auflager, die als Gegenlager zu einer zugeordneten Elektrode dienen, an der Stirnfläche, die an den Trennspalt angrenzt, ebenfalls elektrisch isoliert ist. Beim Aufschmelzen von Material im Trennspalt wandert dieses Material nämlich in den darüber oder darunter gelegenen Spalt zwischen zwei benachbarten Elektroden auf derselben Oberseite bzw. zwischen einer Elektrode und einem Auflager hinein. Damit die Schmelze nicht an den Stirnflächen, die den Spalt bilden, anhaftet, ist es vorteilhaft, wenn diese Stirnflächen nicht nur gekühlt, sondern auch aus Werkstoffen mit geringer Affinität zur Metallschmelze (d. h. einem Anhaften entgegenwirkend) bestehen.

Die elektrische Isolierung der Auflageflächen und der Stirnflächen kann beispielsweise mit einer Beschichtung mit einem elektrisch leitenden und wärmefesten Material oder eine Plattierung mit einem solchen Material erfolgen. Denkbar ist z.B. eine Beschichtung mit Keramikmaterial oder das Belegen der Auflageflächen der Elektroden im Bereich der Kanten und der Stirnseite direkt oberhalb der Trennlinie mindestens teilweise und bevorzugt vollständig mit einer Platte z.B. aus Stein, Beton oder ähnlichem elektrisch nicht leitendem und wärmefesten Material, in dem Schmelze nicht anklebt oder sonst wie haften bleibt.

Das Bauteil kann unbeschichtet sein oder eine elektrisch leitfähige (Funktions-) Beschichtung haben. Die Funktionsbeschichtung ist insbesondere zum Zunderschutz und als Umformschmierstoff vorteilhaft. Denkbar ist z.B. eine AlSi (Aluminium-Silicium) - Beschichtung oder eine organische Beschichtung.

Für Bauteile, die durch Presshärten umgeformt werden, eignen sich vorzugsweise vergütbare höchstfeste Mangan-Bor-Stähle oder C-Stähle.

Das Trennverfahren ist aber auch mit kaltumgeformten höchstfesten Stählen einsetzbar, wie z.B. mit Blechplatinen und Bauteilen aus TWIP (Twinning Induced Plasticity) - Stählen. Selbstverständlich können genauso gut mikrolegierte Stähle, Dual-Phasen-Stähle, TRIP (Transformation Induced Plasticity) - Stähle, Complex-Phasen-Stähle, Partiell-Martensitische Stähle, Martensitische Stähle sowie Edelstähle bearbeitet werden.

Denkbar ist aber auch das Trennen von Blechen aus Titanstählen oder aus Titanlegierungen, wie sie z.B. im Flugzeugbau eingesetzt werden.

Das Trennverfahren ist aber auch für Sandwichbauteile einsetzbar, bei denen zwei oder mehr mindestens teilweise elektrisch leitfähige Materiallagen flächig übereinander geschichtet sind. Die kann beispielsweise ein Blechbauteil mit zwei Blechplatten sein, zwischen denen eine oder mehrer Lagen einer Zwischenschicht z.B. in Form eines Metallschaums oder einer Bitumenschicht angeordnet ist.

Die Trennlinie ist diejenige Linie, entlang der das Bauteil getrennt werden soll. Beispielsweise ist die Trennlinie eine geschlossene Kurve, das ist aber nicht notwendig. Die Trennlinie kann gekrümmt verlaufen, auch das ist aber nicht notwendig.

Unter dem Merkmal, dass das Bauteil entlang der Trennlinie schmilzt und getrennt wird, wird insbesondere verstanden, dass das Bauteil aufgrund seines ohmschen bzw. komplexen Widerstands erwärmt wird, bis der Schmelzpunkt des Materials des Bauteils überschritten ist. Es handelt sich also um eine konduktive Erwärmung.

Unter dem Merkmal, dass das Bauteil und die mindestens eine erste Elektrode sowie das Bauteil und die mindestens eine zweite Elektrode in Kontakt zueinander so angeordnet wird, dass das Bauteil von einer ersten Seite entlang der Trennlinie elektrischen Kontakt zur ersten bzw. zweiten Elektroden hat, wird insbesondere verstanden, dass sich mindestens eine Kontaktkante oder eine Kontaktfläche der mindestens einen ersten bzw. zweiten Elektrode parallel zur Trennlinie erstreckt. Das heißt insbesondere, dass ein Abstand zwischen der Kontaktkante bzw. der Kontaktfläche der Elektroden und der Trennlinie im Wesentlichen, d.h. mit einer Toleranz von Maßabweichungen von bis zu 2/10 mm, konstant ist.

Die Kontaktkante bzw. Kontaktfläche der Elektroden beschreiben diejenige Linie, in der die jeweilige Elektrode in Kontakt mit dem Bauteil steht und in der der Abstand zur Trennlinie minimal ist. Zwischen der Kontaktkante bzw. Kontaktfläche und der Trennlinie kann ein Abstand bestehen. Die Aussagen gelten sowohl für das Anordnen an der mindestens einen ersten Elektrode, als auch an der mindestens einen zweiten Elektrode entsprechend.

Vorzugsweise werden die Elektroden an das Bauteil mit einer solchen Elektrodenanpresskraft gepresst, dass der Übergangswiderstand möglichst klein gehalten wird. Insbesondere bei einem Sandwichbauteil sollte die Elektrodenanpresskraft allerdings auch nicht übermäßig groß sein, dass die Sandwichstruktur und dabei insbesondere druckempfindlichere Zwischenlagen, nicht durch die Anpresskraft in Mitleidenschaft gezogen werden.

In der Regel liegen die Elektroden mit einer möglichst großen Kontaktfläche am Bauteil an, damit der Übergangswiderstand zwischen den Elektroden und dem Bauteil möglichst gering ist.

Unter dem Merkmal, dass das Bauteil entlang der Trennlinie elektrischen Kontakt zur ersten bzw. zweiten Elektrode hat, wird insbesondere verstanden, dass die Kontaktkanten bzw. Kontaktflächen der mindestens einen ersten bzw. zweiten Elektrode eine durchgehende Linie bilden können, die aber nicht notwendiger Weise durchgehend sein muss. So können die mindestens eine erste Elektrode und/oder die mindestens eine zweite Elektrode aus einzelnen Segmenten in modularer Bauweise bestehen, die sich entlang der Trennlinie erstrecken. Auf diese Weise ist ein Elektrodensegmentaustausch bei Verschleiß einfach möglich.

Günstig ist es, wenn zwischen der mindestens einen ersten Elektrode und der mindestens einen zweiten Elektrode ein Trennspalt vorhanden ist, dessen Breite im Wesentlichen konstant ist. Hierunter wird insbesondere verstanden, dass die Breite nicht im mathematischen Sinne konstant sein muss. So sind Abweichungen von beispielsweise bis zu 2/10 mm tolerierbar. Die Trennlinie, an der das Bauteil aufschmilzt und getrennt wird, befindet sich immer in der Mitte des Trennspaltes, so dass sie auch bei variierender oder größerer Spaltbreite eindeutig festgelegt ist.

Beim Durchführen des Verfahrens werden die mindestens eine erste Elektrode und die mindestens eine zweite Elektrode bevorzugt so angeordnet, dass sie für jeden Punkt der Trennlinie einander gegenüberliegend auf derselben Oberfläche des Bauteils angeordnet sind. Denkbar ist aber auch, dass zwei Elektroden bezüglich der Trennlinie einander gegenüberliegend auf einander gegenüberliegenden Oberseiten einer der Bauteilkontur folgenden Freiformfläche angeordnet sind. In einer anderen Ausführungsform sind zwei Elektroden auf derselben Oberseite des Bauteils und eine Elektrode auf der gegenüberliegenden Oberseite angeordnet.

Besonders günstig ist es, wenn die mindestens erste Elektrode auf einer Oberfläche anliegt, die der Oberfläche des Bauteils gegenüberliegt, an der die mindestens eine zweite Elektrode anliegt. Die mindestens eine erste Elektrode liegt zudem mit der dazwischen liegenden Trennlinie bezogen auf die Trennlinie gegenüber der mindestens einen zweiten Elektrode. In diesem Fall verläuft der Strom diagonal durch das Bauteil und es ergibt sich eine besonders effiziente Trennung.

Der zur konduktiven Trennung verwendete Strom kann ein Gleichstrom oder ein Wechselstrom sein. Der Strom kann während des Trennvorgangs auf einen festen Wert eingestellt bleiben oder auch während des Trennvorganges geregelt sein. Ein Wechselstrom kann z.B. durch Phasenanschnittssteuerung in seiner Leistung angepasst werden. Die Frequenz des elektrischen Wechselstroms liegt vorzugsweise zwischen 40 Hz und 140 Hz. Besonders geeignet sind die europäische Netzfrequenz von 50 Hz, die amerikanische Frequenz von 60 Hz oder die durch Gleichrichten herstellbaren jeweils doppelten Frequenzen, nämlich 100 Hz oder 120 Hz. Es ist allerdings auch möglich, höhere oder niedrigere Frequenzen zu verwenden, wobei die Verwendung der Netzfrequenz besonders einfach ist.

Günstig ist es, wenn die elektrische Spannung so groß gewählt wird, dass innerhalb von weniger als 3 Sekunden das Bauteil an zumindest einer Stelle lokal geschmolzen ist. In der Regel wird die Stromstärke im Bereich von 10 bis 20 kA (Kilo-Ampere) liegen, um dieses Ziel zu erreichen.

Vorzugsweise wird der elektrische Strom an zumindest einer Stromeinleitstelle in die mindestens eine erste Elektrode eingeleitet und an zumindest einer Stromableitstelle aus der mindestens einen zweiten Elektrode abgeleitet, wobei die Stromeinleitstelle und die Stromableitstelle so gewählt werden, dass sich das Bauteil entlang der Trennlinie so inhomogen erwärmt, dass es an zumindest einer Stelle der Trennlinie schmilzt. Wenn es sich bei dem eingeleiteten Strom um reinen Wechselstrom handelt, sind die Begriffe Stromeinleitstelle und Stromableitstelle austauschbar.

Bei der Stromeinleitstelle und der Stromableitstelle handelt es sich um die Punkte, an denen die Elektroden beispielsweise mit elektrischen Leitungen kontaktiert sind, wobei diese Leitung mit der Stromquelle verbunden ist. Bei der Stromquelle kann es sich um einen Hochleistungs-Niedervolttransformator handeln, wie er beispielsweise als konventioneller Schweißtrafo erhältlich ist.

Im Folgenden wird auf den physikalischen Hintergrund eingegangen, der dazu führt, dass das Bauteil inhomogen erwärmt werden kann. Für jeden Punkt auf der Trennlinie existiert ein Strompfad, das heißt eine gedachte Verbindung von der Stromquelle durch eine erste Elektrode, durch das Bauteil im Punkt der Trennlinie, durch eine zweite Elektrode und zurück zur Stromquelle, der den geringsten komplexen Widerstand hat, so dass in dieser gedachten Verbindung, die auch als Strompfad bezeichnet werden kann, der elektrischen Strom konzentriert ist. Es kann also bei einer gegebenen Wahl von Stromeinleitstelle und Stromableitstelle jedem Punkt auf der Trennlinie derjenige elektrische Widerstand zugeordnet werden, den der elektrische Strom durch diesen Punkt erfährt. Beim Anlegen einer elektrischen Spannung zwischen der Stromeinleitstelle und der Stromableitstelle fließt durch denjenigen Punkt auf der Trennlinie der größte elektrische Strom, der den geringsten ohmschen und/oder komplexen Widerstand aufweist.

Der für das Trennen mit Wechselstrom relevante komplexe elektrische Widerstand ist umso größer, je länger der Weg ist, den der elektrische Strom nehmen muss. Das liegt daran, dass ein längerer Weg eine größere Induktivität und damit einen größeren komplexen Widerstand hat. Gleichzeitig ist der für das Trennen mit Gleichstrom oder mit Wechselstrom relevante ohmsche Widerstand bei langen Wegen größer als bei kurzen.

Für jede Wahl für die Stromeinleitstelle bzw. Stromeinleitstellen einerseits und die Stromableitstelle bzw. die Stromableitstellen andererseits existiert zumindest ein Punkt, wo der komplexe Widerstand minimal wird. Dass heißt, dass der Wirk-Strom, der zur konduktiven Erwärmung führt, durch diesen Minimal-Punkt maximal ist.

Es existiert zudem zumindest ein Maximal-Punkt, in dem der komplexe elektrische Widerstand maximal ist und wo korrespondierend der elektrische Wirk-Strom beim Anlegen des Wechselstroms minimal wird. Es kann nun die Stromeinleitstelle im Wesentlichen beliebig gewählt werden.

Durch Variieren der Stromableitstelle kann für jedes vorgegebene Bauteil eine Position gefunden werden, so dass der Unterschied zwischen dem elektrischen Widerstand durch den Minimal-Punkt auf der Trennlinie und durch den Maximal-Punkt auf der Trennlinie so groß wird; dass das Bauteil im Minimal-Punkt am schnellsten erwärmt wird und dort als erstes schmilzt. Sobald das Material an diesem Punkt geschmolzen ist, wird das Bauteil an diesem Punkt getrennt, weil sich das flüssige Material, in der Regel Metall, zu den beiden Seiten von der Trennlinie weggezogen wird. Dadurch wird der elektrische Strom durch diesen Punkt unterbunden und der Stromfluss konzentriert sich auf die Stellen des Bauteils, die noch nicht getrennt sind. Sobald also ein erster Punkt des Bauteils getrennt worden ist, schreitet das weitere Trennen fort. Je größer der Unterschied zwischen dem Wirk-Strom durch den Minimal-Punkt und dem Wirk-Strom durch den Maximal-Punkt, desto schneller setzt das Trennen ein.

Besonders günstig ist es, wenn die Stromeinleitstelle benachbart zur Stromableitstelle angeordnet ist. In diesem Fall ist der Unterschied zwischen dem kleinsten komplexen Widerstand und dem größten komplexen Widerstand besonders groß.

Gemäß einer bevorzugten Ausführungsform werden die Stromeinleitstelle und die Stromableitstelle so gewählt, dass der längste Strompfad von der Stromeinleitstelle zur Stromableitstelle einen größeren ohmschen und/oder komplexen Widerstand aufweist, als der kürzeste Strompfad zu der Stromeinleitstelle zur Stromableitstelle.

Bei einer erfindungsgemäßen Trennvorrichtung bestehen die Elektroden vorzugsweise aus einem Material mit einer hohen elektrischen Leitfähigkeit. Beispielsweise liegt die Leitfähigkeit oberhalb von 35 Siemens pro Meter. Gut geeignet sind Kupfer, Kupferlegierungen oder Silber. Als sehr festes und hartes Material, das zu einem geringen Verschleiß der Anlagekanten, die an dem Bauteil angepresst werden, führt, eignet sich z.B. eine Kupfer-Cobalt-Beryllium-Legierung (CuCoBe) oder Kupfer-Beryllium-Legierungen (CuBe2).

Um Kurzschlüsse zu vermeiden, sind die beiden Elektroden dann, wenn sie jeweils in Kontakt mit dem Bauteil stehen, vorzugsweise durch einen länglichen Trennspalt voneinander getrennt. In der Mitte dieses Trennspalts verläuft die Trennlinie. Abstrakter ausgedrückt ist zumindest lokal die senkrechte Projektion der ersten Elektrode auf das Bauteil durch die Trennlinie von der senkrechten Projektion der zweiten Elektrode auf das Bauteil getrennt.

Vorzugsweise umfasst die Trennvorrichtung eine Stromquelle, die mit der mindestens einen ersten Elektrode und der mindestens einen zweiten Elektrode verbunden ist. Bei der Stromquelle handelt es sich beispielsweise um einen Niedervolt-Transformator, der eine Spannung von unter 20 V, insbesondere von höchstens 10 V abgibt. Dabei ist der Transformator vorzugsweise ausgebildet zum Abgeben eines elektrischen Stroms von zumindest 1 kA, in der Regel jedoch von einem Strom im Bereich von 10 bis 20 kA.

Günstig ist es, wenn die Trennvorrichtung eine Kühlvorrichtung für die mindestens eine erste Elektrode und/oder die mindestens eine zweite Elektrode umfasst. Beispielsweise können die mindestens eine erste Elektrode und/oder die mindestens eine zweite Elektrode Kühlkanäle aufweisen. Diese Kühlkanäle können beispielsweise mit einer Kühlwasserversorgung verbunden sein, um ein Überhitzen der Elektroden zu verhindern. Auch das Bauteil wird hierdurch gekühlt und vor Verzug geschützt.

Gemäß einer bevorzugten Ausführungsform umfasst eine erste Werkzeugkomponente eine erste Auflage, die seitlich benachbart zu mindestens einer zugeordneten ersten Elektrode dieser Werkzeugkomponente angeordnet ist. Eine zweite Werkzeugkomponente weist eine zweite Auflage auf, die seitlich benachbart zu der mindestens einen zugeordneten zweiten Elektrode angeordnet ist. Die erste Werkzeugkomponente und die zweite Werkzeugkomponente sind vorzugsweise so zueinander bewegbar gelagert, dass das Bauteil zwischen der ersten Elektrode und der zweiten Auflage und zwischen der zweiten Elektrode und der ersten Auflage einspannbar ist. Die erste Auflage ist vorzugsweise gegenüber der zweiten Elektrode angeordnet und hat dabei zumindest auf der der Trennlinie zugewandten Seite die gleiche Kontur wie die zweite Elektrode.

Vorzugsweise umfasst die Trennvorrichtung einen Antrieb, der zum Bewegen der ersten Werkzeugkomponente relativ zur zweiten Werkzeugkomponente ausgebildet ist, so dass das Bauteil zwischen der ersten Werkzeugkomponente und der zweiten Werkzeugkomponente spannbar ist. Wird in die Trennvorrichtung das Bauteil eingelegt, so kann danach der Antrieb betätigt werden, um das Bauteil zwischen den Werkzeugkomponenten und damit zwischen den Elektroden einzuspannen. Anschließend wird ein elektrischer Strom durch das Bauteil geleitet, so dass das Bauteil entlang der Trennlinie getrennt wird. Danach wird der Antrieb erneut betätigt, um die Werkzeugkomponenten auseinander zu fahren, so dass nachfolgend das fertige Bauteil ausgestoßen werden kann. Dazu ist eine Ausstoßvorrichtung vorzusehen. Die genannten Verfahrensschritte werden beispielsweise durch eine elektrische Steuerung gesteuert.

Vorzugsweise sind die mindestens eine erste Elektrode und die mindestens eine zweite Elektrode ausgebildet, um an dem Bauteil entlang der Trennlinie mit einer Kontaktkante oder einer Kontaktfläche anzuliegen. Es reicht aus, wenn nur ein Teil des Umfangs der Elektrode im Querschnitt gesehen an dem Bauteil elektrisch leitend anliegt. Der Querschnitt der Elektroden muss unter Berücksichtigung des Elektrodenwiderstands, der Stromtragfähigkeit für den zum Trennen notwendigen Strom und der über der Trennstelle abfallenden Spannung ausreichend dimensioniert sein. Beispielsweise haben die Elektroden einen Querschnitt von mindestens 40 x 40 mm.

Die Elektroden sind vorzugsweise an die Kontur des Bauteils im Bereich der Anlagefläche angepasst und können damit zum formgebenden Einspannen des Bauteils mitgenutzt werden.

Die Trennvorrichtung ist vorzugsweise für Bauteile konzipiert, deren Dicke und Festigkeit das an sich preiswertere Scherschneiden nicht mehr zulassen. Sie kann z. B. zum Trennen von pressgehärteten Blechbauteilen eingesetzt werden, deren Blechdicke größer als 1,25 mm ist und die Zugfestigkeit des Materials üblicherweise eine Streckgrenze von über 1.500 MPa aufweist.

Im Folgenden wird die Erfindung anhand eines exemplarischen Ausführungsbeispiels näher erläutert. Dabei zeigt
- Figur 1: eine perspektivische Ansicht einer ersten Trennvorrichtung;
- Figur 2: eine schematische Detailansicht der Trennvorrichtung gemäß Figur 1;
- Figur 3: einen Querschnitt durch eine zweite Trennvorrichtung;
- Figur 4: eine schematische Darstellung einer dritten Trennvorrichtung;
- Figur 5: eine schematische Querschnittsansicht durch ein flaches Bauteil mit durch das konduktive Trennen abgerundeter Kante;
- Figur 6: schematische Ansicht einer Trennvorrichtung gemäß der Erfindung, mit zwei diagonal gegenüberliegenden Elektroden und beschichteten Stirnseiten und Innenkanten mit größerem Trennspalt zwischen Elektroden und beschichteten Auflagern;
- Figur 7: schematische Ansicht einer Trennvorrichtung gemäß Figur 6 ohne Spalt zwischen unterer Elektrode und Auflager;
- Figur 8: schematische Ansicht einer Trennvorrichtung gemäß Figur 7 mit reduziertem Spalt zwischen oberem Auflager und oberer Elektrode;
- Figur 9: schematische Ansicht einer Trennvorrichtung gemäß Figur 8, wobei die untere Elektrode in einen das Auflager bildenden Werkzeugblock als Werzeugeinsatz eingebaut ist;
- Figur 10: schematische Darstellung der Trennvorrichtung nach Figur 9 mit graphitbeschichteten Auflageflächen für das Bauteil angrenzend an die Innenkanten;
- Figur 11: schematische Ansicht der Trennvorrichtung gemäß Figur 9 mit nach oben zulaufendem, geschlossenem Spalt zwischen oberer Elektrode und oberem Auflager;
- Figur 12: Skizzen möglicher Formen des Spaltes für die Trennvorrichtung aus Figur 11;
- Figur 13: Skizze einer Trennvorrichtung mit Elektroden und Auflagern, deren Stirnflächen mit elektrisch isolierenden Platten z. B. aus Steinzeug oder Keramik belegt sind; und
- Figur 14: vergrößerte Ausschnittsansicht des Bereichs um eine Trennstelle mit überhöht dargestellter Vertiefung in der oberen und/oder unteren elektrischen Isolierung angrenzend an die Trennstelle.

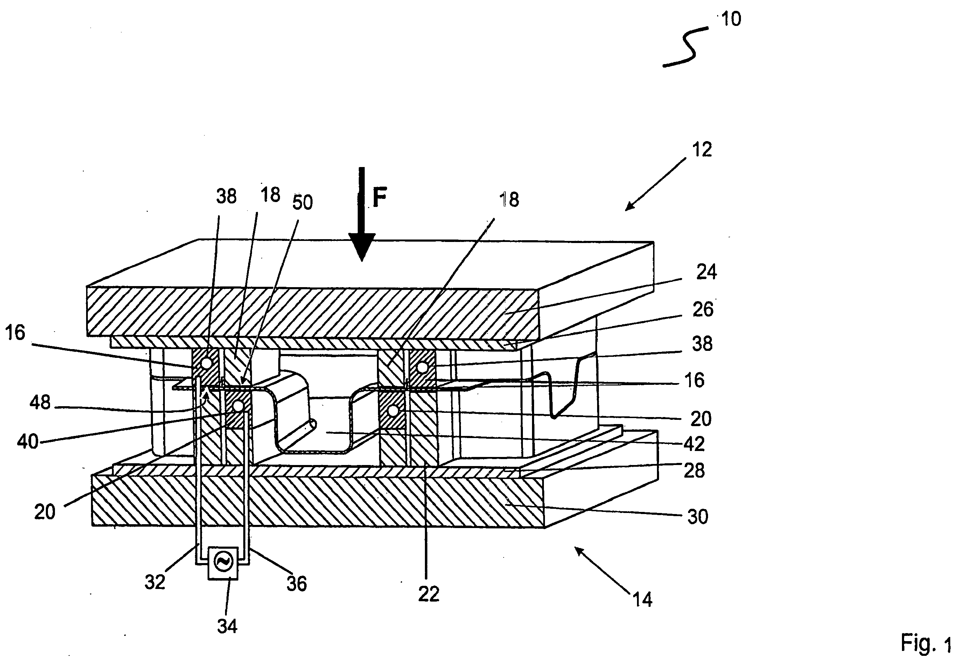

Figur 1 zeigt eine Trennvorrichtung 10 mit einer ersten Werkzeugkomponente 12 (z.B. Oberwerkzeug) und einer zweiten Werkzeugkomponente 14 (z.B. gegenüberliegendes Unterwerkzeug). Die erste Werkzeugkomponente 12 umfasst mindestens eine erste Elektrode 16 und mindestens eine erste Auflage 18. Die zweite Werkzeugkomponente 14 weist mindestens eine zweite Elektrode 20 und mindestens eine zweite Auflage 22 auf.

Die erste Elektrode 16 ist gegenüber einem Werkzeugträger 24 der ersten Werkzeugkomponente 12 durch eine Isolierung 26 elektrisch isoliert. Dadurch ist auch die erste Elektrode 16 gegenüber der zweiten Elektrode 20 elektrisch isoliert. Zusätzlich weist die zweite Werkzeugkomponente 14 eine zweite Isolierung 28 auf, mittels der die zweite Elektrode 20 elektrisch gegenüber einem zweiten Werkzeugträger 30 der zweiten Werkzeugkomponente 12 isoliert ist.

Die erste Elektrode 16 ist mittels einer ersten Leitung 32 an eine Stromquelle 34 angeschlossen. Die Stromquelle 34 ist mittels einer zweiten Leitung 36 mit der zweiten Elektrode 20 elektrisch verbunden.

Figur 1 zeigt zudem einen ersten Kühlkanal 38 in der ersten Elektrode 16 und einen zweiten Kühlkanal 40 in der zweiten Elektrode 20. Die beiden Kühlkanäle 38, 40 sind über nicht eingezeichnete Leitungen mit einer Kühlwasserversorgung verbunden, so dass Kühlwasser durch die beiden Elektroden 16, 20 zirkuliert.

Zwischen dem ersten Werkzeug 12 und dem zweiten Werkzeug 14 wird ein flächiges Bauteil 42, im vorliegenden Fall ein Blechbauteil, angeordnet. Über einen nicht dargestellten, an sich bekannten Antrieb (beispielsweise eine hydraulische Umformpresse oder ein Pneumatik-Antrieb) wird das Werkzeug 12 relativ zum zweiten Werkzeug 14 bewegt und es wird eine Elektrodenanpresskraft F auf das erste Werkzeug 12 aufgebracht, so dass dieses gegen das zweite Werkzeug 14 gedrückt wird. Wenn, wie in Figur 1 gezeigt, das erste Werkzeug 12 und das zweite Werkzeug 14 aufeinander gepresst sind, liegt die erste Elektrode 16 mit einer ersten Stirnseite 48 am Bauteil 42 an. Gleichzeitig liegt die zweite Elektrode 16 mit einer zweiten Stirnseite 50 ebenfalls am Bauteil 42 an.

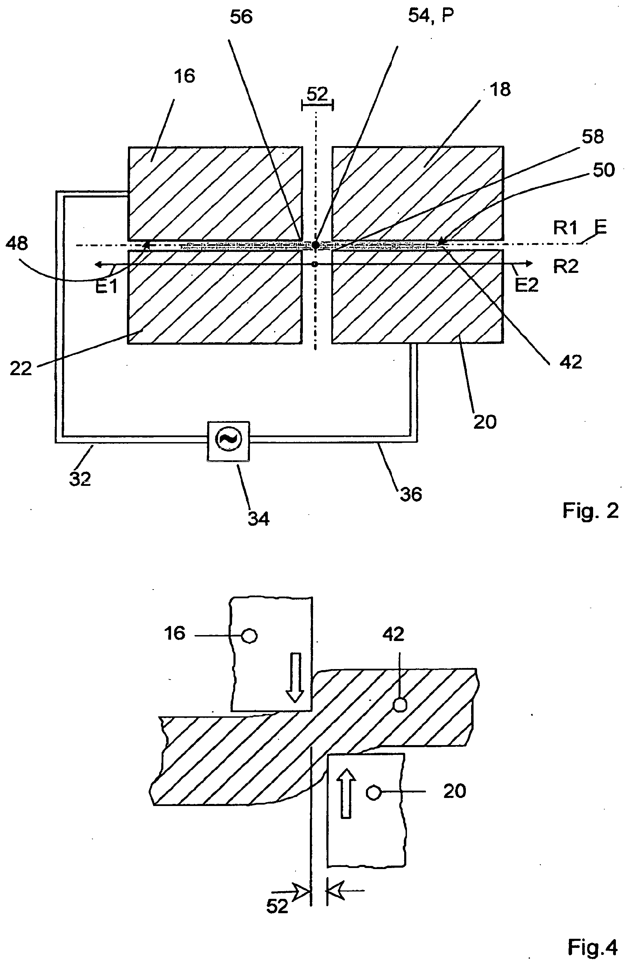

Figur 2 zeigt eine schematische Detailansicht der Trennvorrichtung 10 gemäß Figur 1. Es ist zu erkennen, dass das Bauteil 42 einerseits zwischen der ersten Elektrode 16 und der zweiten Auflage 22 und andererseits zwischen der zweiten Elektrode 20 und der ersten Auflage 18 eingespannt ist. Die Elektroden 16, 20, weisen bezüglich einer senkrechten Projektion auf das Bauteil 42 einen Trennspalt 52 auf, in dessen Mitte eine vorgegebene Trennlinie 54 verläuft.

Die erste Elektrode 16 besitzt einen ersten Rand 56, der bezüglich der Stirnseite 48 der Trennlinie 54 benachbart verläuft. Die zweite Elektrode 20 hat ihrerseits einen zweiten Rand 58, der ebenfalls zur Trennlinie 54 parallel verläuft. Die beiden Ränder 56, 58 stellen diejenigen Punkte der jeweiligen Elektrode 16, 20 dar, die der Trennlinie 54 am nächsten liegen, wenn das Bauteil 42 zwischen den beiden Elektroden 16, 20 eingespannt ist. Dabei ist für das Einspannen keine besonders große Kraft erforderlich. Es ist ausreichend, dass die Elektrodenanpresskraft F (vgl. Figur 1) so groß ist, dass ein sicherer elektrischer Kontakt und ein geringer Übergangswiderstand zwischen den Elektroden 16, 20 einerseits und dem Bauteil 42 andererseits gewährleistet ist.

Wird mittels der Stromquelle 34 und der ersten Leitung 32 und der zweiten Leitung 36 eine Spannung U an die beiden Elektroden 16, 20 angelegt, so fließt ein Strom I im Bereich des Trennspalts 52 durch das Bauteil 42. Durch den ohmschen bzw. bei Wechselstrom komplexen Widerstand des Bauteils 42 im Trennspalt 52 erwärmt sich das Bauteil 42, bis es an einer Stelle schmilzt. Dadurch wird das Bauteil 42 an der Trennlinie 54 getrennt.

Figur 2 zeigt zudem schematisch eine der Kontur folgende Freiformfläche E, die im in Figur 2 gezeigten Punkt P der Trennlinie 54 das Bauteil 42 linear approximiert. Diese Freiformfläche E, die aufgrund der Draufsicht als Strich zu sehen ist, teilt den dreidimensionalen Raum in einen ersten Halbraum R1 und einen zweiten Halbraum R2. Es ist zu erkennen, dass das die erste Elektrode 16 und die zweite Elektrode 20 so angeordnet sind, dass sie für den Punkt P der Trennlinie 54 bezüglich der lokalen Freiformfläche E in dem Punkt P durch das Bauteil 42 auf verschiedenen Seiten der Freiformfläche E liegen, nämlich entweder im ersten Halbraum R1 oder im zweiten Halbraum R2.

Es ist zudem zu erkennen, dass die erste Elektrode 16 bezüglich der lokalen Freiformfläche E auf verschiedenen Seiten der Trennlinie 54 liegt. Die Trennlinie 54 teilt nämlich die Ebene E in eine erste Teilebene E1 und eine zweite Teilebene E2, die sich in der Trennlinie 54 treffen. Die erste Elektrode 16 liegt in der ersten Teilebene E1, die zweite Elektrode 20 in der zweiten Teilebene E2.

Die Elektroden 16 und 20 liegen somit mit der zwischenliegenden Trennlinie 54 einander gegenüber auf derselben oder - diagonal einander gegenüber - auf unterschiedlichen, gegenüberliegenden Oberfächen des Bauteils 42.

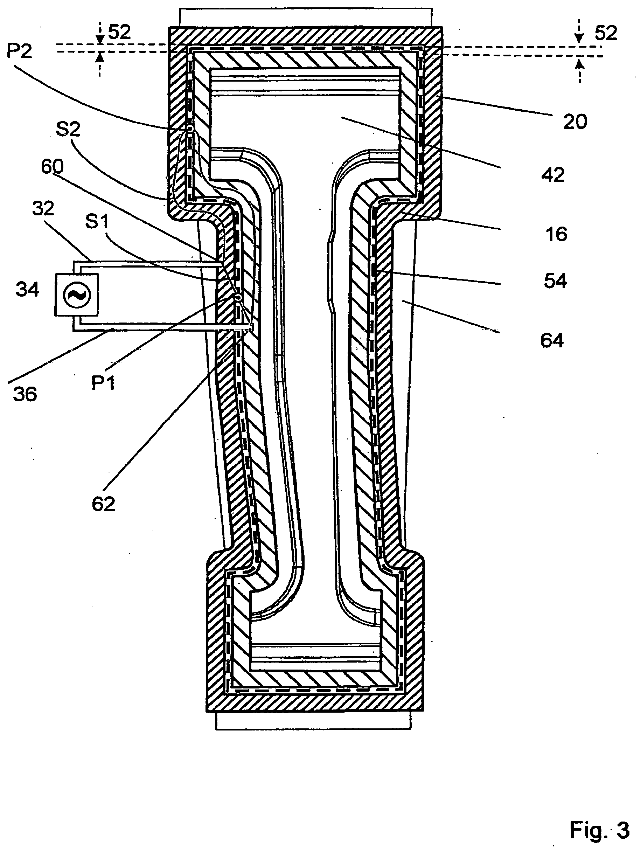

Figur 3 zeigt eine schematische horizontale Schnittansicht der Trennvorrichtung aus Figur 1, in der das Bauteil 42 in Kontakt mit den Elektroden 16, 20 steht. Es ist zu erkennen, dass sich die erste Elektrode 16 von einer ersten Seite, in diesem Fall nämlich von außen, entlang der gestrichelt gezeichneten Trennlinie 54 erstreckt und Kontakt mit dem Bauteil 42 hat. Die zweite Elektrode 20 verläuft von einer zweiten Seite, im vorliegenden Fall nämlich von innen entlang der Trennlinie 54.

Zwischen der ersten Elektrode 16 und der zweiten Elektrode 20 ist der Trennspalt 52 ausgebildet. Der Trennspalt 52 hat beispielsweise eine Breite von 2 mm. Da die Schneidkante immer in der Mitte des Trennspaltes 52 verläuft, wird die Maßhaltigkeit von der Breite des Trennspaltes 52 nicht beeinflusst.

Die erste Leitung 32 kontaktiert die erste Elektrode 16 in einer Stromeinleitstelle 60. Die zweite Leitung 36 ist in einer Stromableitstelle 62 mit der zweiten Elektrode 20 elektrisch verbunden.

Figur 3 zeigt einen ersten Strompfad S1 durch einen ersten Punkt P1 auf der Trennlinie 54. Es ist zu erkennen, dass es sich hierbei um die kürzeste Verbindung zwischen der Stromeinleitstelle 60 und der Stromableitstelle 62 handelt.

Entsprechend hat der Strompfad S1 einen relativ kleinen komplexen elektrischen Widerstand.

Figur 3 zeigt zudem einen zweiten Strompfad S2 durch einen zweiten Punkt P2 auf der Trennlinie 54. Es ist zu erkennen, dass der zweite Strompfad S2 deutlich länger ist. Dementsprechend ist der komplexe elektrische Widerstand entlang des zweiten Strompfads S2 deutlich größer als entlang des ersten Strompfads S1. Insbesondere ist der induktive Widerstand entlang des zweiten Strompfads S2 deutlich größer als entlang des ersten Strompfads S1.

Da der Betrag des komplexen elektrischen Widerstands entlang des ersten Strompfads S1 bezüglich aller Punkte P auf der Trennlinie 54 minimal ist, ist der elektrische Wirk-Strom durch den Punkt P1 maximal. Infolge dessen erwärmt sich das Bauteil 42 im Punkt P1 am stärksten und schmilzt dort als erstes auf. Es bildet sich dabei eine Verdickung am entstehenden Rand des fertigen Bauteils. Da das Material des Bauteils 42 im Punkt P1 bereits aufgetrennt ist, konzentriert sich der elektrische Strom auf die noch nicht aufgetrennten Bereiche und das Bauteil wird entlang der Trennlinie 54 getrennt. Zurück bleiben das fertige Bauteil und ein Abschnitt 64, der dem Schrott zugeführt wird.

Figur 3 zeigt, dass die Stromeinleitstelle 60 benachbart zur Stromableitstelle 62 angeordnet ist, also in unmittelbarer Umgebung.

Figur 4 zeigt eine weitere Ausführungsform einer Trennvorrichtung, bei der die erste Elektrode 16 als ein Obermesser und die zweite Elektrode 20 als ein Untermesser ausgebildet sind. Zwischen den Elektroden 16, 20 besteht der Trennspalt 52. Durch einen Antrieb wird die erste Elektrode 16 auf die zweite Elektrode 20 zu bewegt, so dass sich das Bauteil zwischen den Elektroden konduktiv erwärmt und and Festigkeit verliert. Die Bewegung kann analog zum Scherschneiden mit schräg gestellten Elektroden 16, 20 so erfolgen, dass die Kontaktanlagen der Elektroden 16, 20 der Trennlinie 54 folgen und das Bauteil 42 so sukzessive entlang der Trennlinie 54 konduktiv erwärmt und getrennt wird.

Das konduktive Trennen kann optional aber auch mit dem Scherschneiden kombiniert werden, wobei die Kontaktanlagekanten der Elektroden 16, 20 zugleich Schneidkanten sind. So können die Schneidkanten das Bauteil 42 nach der lokalen konduktiven Erwärmung und dem Aufschmelzen des Materials an der Trennlinie 54 zusätzlich schneiden.

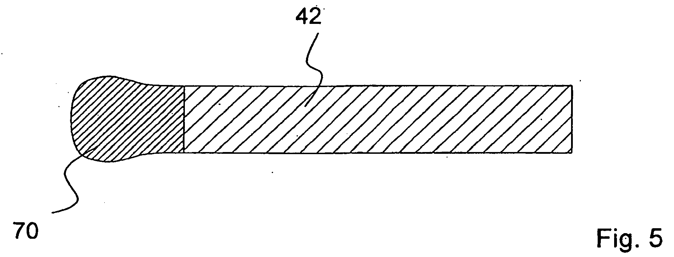

Figur 5 lässt eine schematische Querschnittsansicht durch ein flaches Bauteil 42 mit durch das konduktive Trennen abgerundeter Trennkante 70 erkennen. Diese stumpfe Trennkante 70 hat oftmals Vorteile bei der Weiterverarbeitung, z.B. wenn ein Dichtungsgummi auf die Trennkante 70 aufgesteckt wird.

Es ist anhand der unterschiedlichen Schattierungen erkennbar, dass die Wärmeeinflusszone von der Trennkante 70 nur gering in das Bauteil 42 hineinragt.

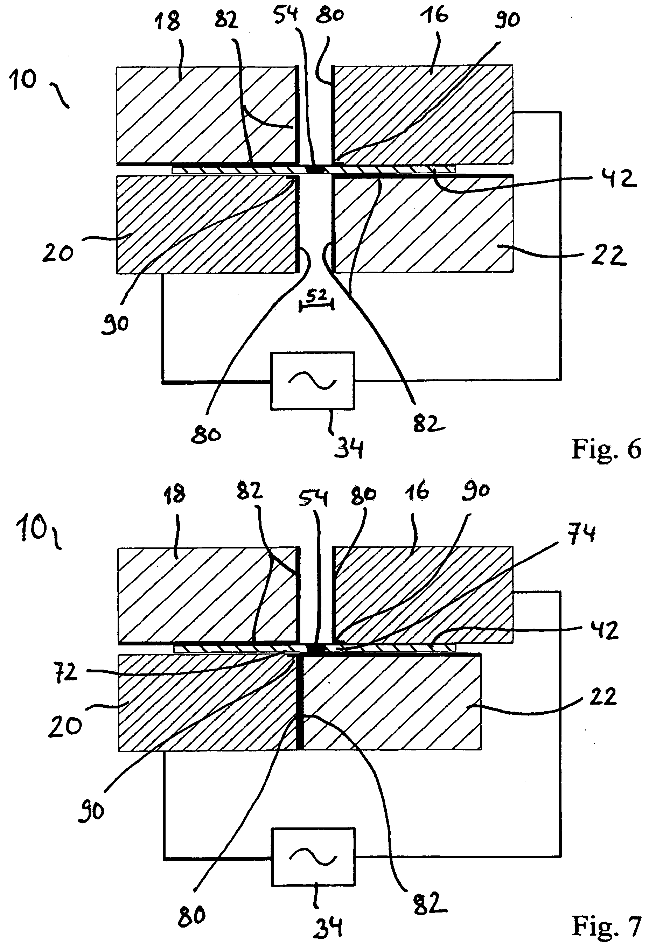

Figur 6 lässt eine schematische Ansicht einer Trennvorrichtung gemäß der Erfindung erkennen, die im Prinzip entsprechend der Trennvorrichtung aus Figur 2 aufgebaut ist und ebenfalls nicht dargestellte Kühlkanäle hat.

Die Elektroden 16, 20 sowie die Auflage 18, 22 haben jeweils an den Stirnseitenflächen, die den Trennspalt 52 bilden, eine Keramikbeschichtung 80 aus elektrisch isolierendem Keramikmaterial. Die Keramikbeschichtung 80 erstreckt sich jeweils bis zur Auflagefläche für das Bauteil 42 und ragt über die an die Trennlinie 54 angrenzende Kante 90 der Elektroden an der Auflagefläche von der Trennlinie 54 weg.

Die Kanten 90 der Elektroden sind daher auch an der Auflagefläche über eine reduziertere Länge elektrisch isoliert, so dass der elektrische Strom nicht direkt über die Kante 90 unmittelbar zur Trennlinie 54 gelangt, sondern um die Kante 90 herum ausschließlich durch das Bauteil 42 fließen kann. Dies führt dazu, dass die Stromdichte an der elektrisch isolierten Kante 90 im Unterschied zur nicht isolierten Kante 90 dort reduziert und erst an der Trennlinie 54 konzentriert wird. Eine übermäßige Erwärmung findet daher an der elektrisch isolierten Kante 90 nicht mehr statt, so dass der Schmelzpunkt von der Kante ferngehalten wird. Das Anheften von aufsteigender oder herabfallender Schmelze an den Elektroden 16, 20 sowie den Auflagern 18, 22 wird zudem noch durch die Keramikbeschichtung 80, 82 verhindert, die auch an den Auflageflächen und den Stirnflächen der Auflage 18, 22 vorgesehen ist.

Als Keramikbeschichtung 80, 82 bietet sich insbesondere eine nicht leitende AL₂O₃-Beschichtung an. Dadurch, dass eine solche Keramikbeschichtung 80, 82 nicht leitend ist, wird auch ein Verschweißen des Blechbauteils 42 und den Elektroden 16, 20 verhindert. Im Ergebnis verbleibt die erstarrte Schmelze an beiden getrennten Teilen des Bauteils 42.

Figur 7 lässt eine Ausführungsform der Trennvorrichtung 10 erkennen, bei der im Vergleich zu der Ausführungsform in Figur 6 kein Trennspalt mehr zwischen unterer Elektrode 20 und unterer Auflage 22 mehr vorgesehen ist. Durch die elektrisch isolierende, nicht leitende Keramikbeschichtung 80, 82 an den Stirnseiten der Elektrode 20 und des Auflagers 22 wird an der Unterseite des Bauteils 42 eine Gutseite 72 erzeugt, an der keine Schmelze anhaften kann. Die Schmelze wird im Wesentlichen von der oberen Elektrode 16 angezogen und lagert sich auf der Oberseite des Bauteils an der Trennlinie 54 an. Bei der Ausführungsform gemäß Figur 6 wird die Schmelze hingegen von beiden Elektroden 16, 20 angezogen und lagert sich somit an der Oberseite und der Unterseite des Bauteils 42 an.

Die an die obere Elektrode 16 und die obere Auflage 18 angrenzende Oberseite des Bauteils 42 bildet damit die Schrottseite 74.

Dennoch ist eine leichte Anlagerung von Schmelze an der Gutseite 72 nicht zu verhindern, die zu einer Blechaufdeckung führt. Eine solche Blechaufdeckung kann sich beim Fügen von Bauteilen 42 als problematisch erweisen.

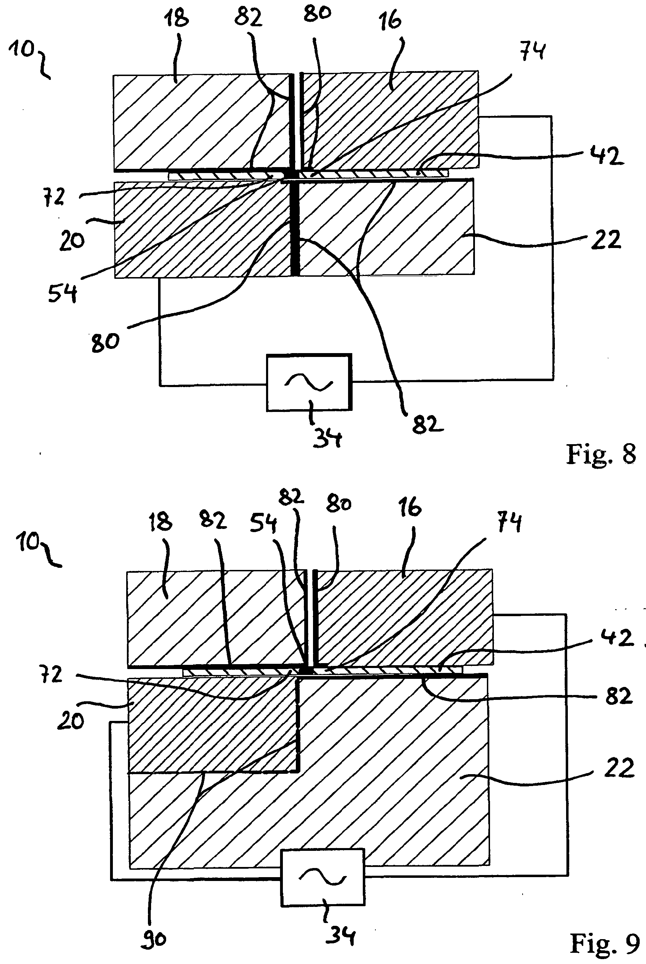

Figur 8 lässt eine Ausführungsform der Trennvorrichtung 10 im Wesentlichen entsprechend der Trennvorrichtung aus Figur 7 erkennen. Im Unterschied hierzu ist der obere Trennspalt 52 weiter verringert. Er sollte weniger als das einfache der Blechdicke betragen und insbesondere kleiner als die aufschmelzende Zone sein. Dies hat zur Folge, dass sich der neu entstehende Rand der Gutseite 72 im Einspannbereich zwischen oberem Auflager 18 und unterer Elektrode 20 und im Bereich der elektrisch isolierenden Beschichtung z. B. mit Keramikmaterial oder Plattierung mit einem anderen elektrisch isolierendem und wärmefesten Material befindet.

Damit wird ein Verschweißen des Bauteils 42 an den Elektroden 16, 20 und den Auflagern 18, 22 verhindert. Der eingespannte Rand der Gutseite 72 des Bauteils 42, d. h. der Rand der linken Hälfte des dargestellten Bauteils 42, kann aufgrund der Einspannung nicht durch erstarrte Schmelze aufdicken. Dies hat den Vorteil, dass insbesondere pressgehärtete Teile mit hoher Konturmaßhaltigkeit gefügt werden können, z. B. durch Überlapp-Punktschweißen, ohne dass eine Blechaufdickung die Maßhaltigkeit beeinträchtigt.

Figur 9 lässt eine modifizierte Ausführungsform der Trennvorrichtung 10 aus Figur 8 erkennen. Dabei ist die untere Elektrode 20 als Werkzeugeinsatz in die zweite Auflage 22 eingebaut und mit Isolierpapier 90 von der zweiten Auflage 22 elektrisch isoliert. Die zweite Auflage 22 bildet zusammen mit der zweiten Elektrode 20 ein integrales Werkzeug, deren Werkzeugoberfläche einschließlich des Elektrodenrandbereichs mit einer elektrisch isolierenden Beschichtung oder eine Plattierung versehen ist. Die gesamte Oberfläche kann dann plan geschliffen werden.

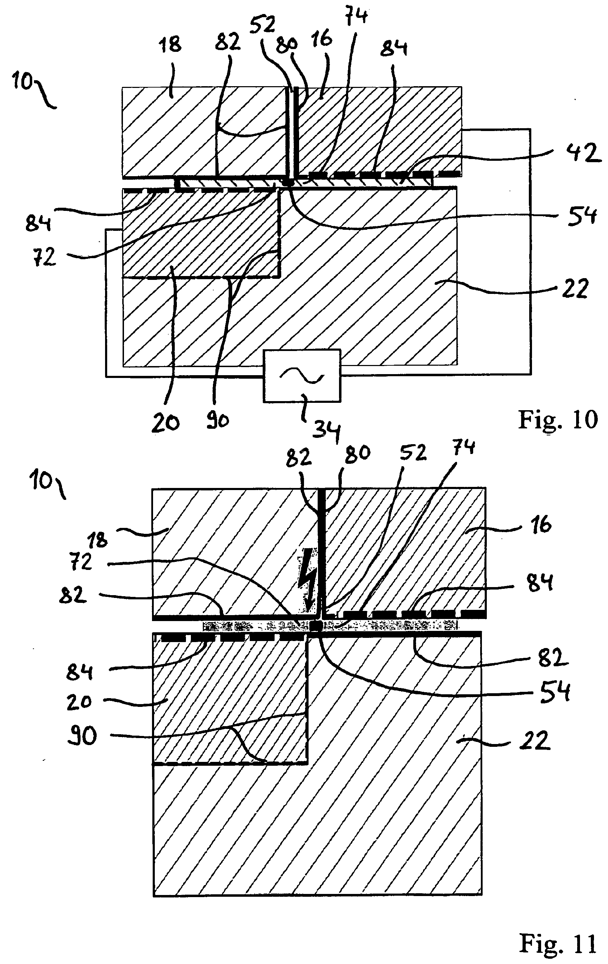

Figur 10 lässt eine Ausführungsform einer Trennvorrichtung 10 ähnlich zur Vorrichtung gemäß Figur 9 erkennen. Im Unterschied hierzu sind die Elektroden an der jeweiligen Auflagefläche zum Bauteil 42 angrenzend an die elektrisch isolierte Kante 90 mit einer Kohlebeschichtung (Graphit) 84 versehen. Damit bleiben die Auflagefläche elektrisch leitend. Die Gefahr einer Verschweißung von Metallschmelze oder einer punktuellen Verschweißung bei Verunreinigung wird jedoch reduziert.

In dieser dargestellten Ausführungsform ist wie auch in der Figur 9 die Auflagefläche der unteren, zweiten Auflage 22 nicht elektrisch isoliert, so dass nur die Stirnfläche bis zur Kante 90 gegenüber der unteren, zweiten Auflage 22 mit einer elektrischen Isolierung z. B. durch Isolierpapier 90 versehen ist.

Figur 11 lässt eine andere Ausführungsform einer Trennvorrichtung ähnlich zu Figur 10 erkennen. Dabei ist der obere Trennspalt 52 jedoch erheblich reduziert und im oberen Bereich vollständig geschlossen. Die obere, erste Elektrode 16 und die angrenzende obere, erste Auflage 18 stoßen im oberen Bereich mit ihren Keramikbeschichtung 80, 82 aneinander und sind damit nicht elektrisch leitend miteinander verbunden.

Im Unterbereich direkt angrenzend an die Auflagefläche zum Bauteil 42 und angrenzend an die Trennlinie 54 ist ein relativ kleiner, sich nach oben verjüngender Trennspalt 52 vorgesehen. Damit wird ein Kanal als Reservoir zur Aufnahme von Schmelze bereitgestellt. Ein unkontrolliertes Herausspritzen von Schmelze beim Trennen des Bauteils 42 wird damit verhindert. Zudem kann der Schmelzfluss und der Verbleib der Schmelze deshalb besser kontrolliert werden.

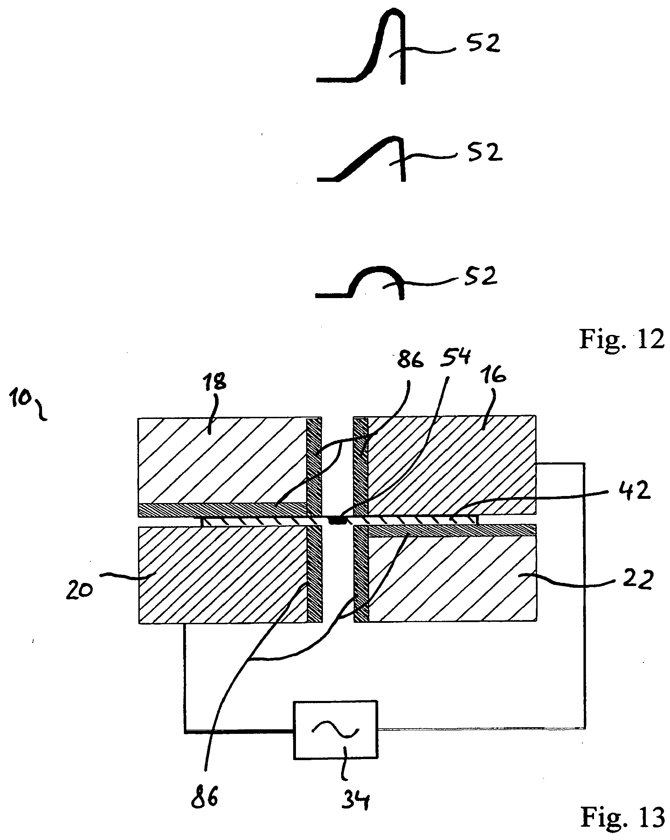

Figur 12 zeigt beispielhafte Geometrievarianten für den als Schmelzkanal bzw. als Reservoir ausgebildeten Trennspalt 52 der Trennvorrichtung aus Figur 11. Erkennbar ist, dass je nach gewünschtem Endergebnis ein schmaler, hoher, breiter, aber weniger hoher oder symmetrischer Schmelzkanal vorteilhaft sein kann.

Figur 13 lässt eine andere Ausführungsform einer Trennvorrichtung erkennen, bei der die Stirnflächen und Auflageflächen der Auflager 18, 22 vollständig, sowie die Kanten 90 der Elektroden 16, 20 im Bereich der Auflagefläche für das Bauteil 42 teilweise mittels von Platten 86 elektrisch isoliert sind, die auf die Elektroden 16, 20 sowie Auflager 18, 22 aufgebracht sind. Dies hat den Vorteil reduzierter Werkzeugkosten durch einen Verzicht auf Beschichtung. Die Nacharbeit wird reduziert. Platten 86 können beispielsweise Keramikplatten, Steinplatten, Betonplatten oder Platten aus einem anderen elektrisch isolierendem und wärmefestem Material sein.

Eine solche Plattierung anstelle von einer Beschichtung kann im Prinzip auch bei den anderen Ausführungsformen gemäß Figuren 7 bis 11 eingesetzt werden. Denkbar ist auch eine Kombination der elektrischen Isolierung teilweise mit Plattierung, Beschichtung und/oder Isolierpapier sowie ggf. optional einer zusätzlichen Kohlebeschichtung der elektrisch leitenden Kontakt-Auflageflächen der Elektroden 16, 20.

So ist z. B. denkbar, das untere Werkzeug bestehend aus unterer zweiter Auflage 22 und unterer zweiter Elektrode 20 integral mit zwischenliegendem Isolierpapier 90 und einer elektrisch isolierenden Beschichtung 82 herzustellen, während die Stirnseite insbesondere der oberen, ersten Elektrode 16 mit einer Keramikplatte versehen ist. Das obere, erste Auflage 18 kann entweder plattiert oder beschichtet sein.

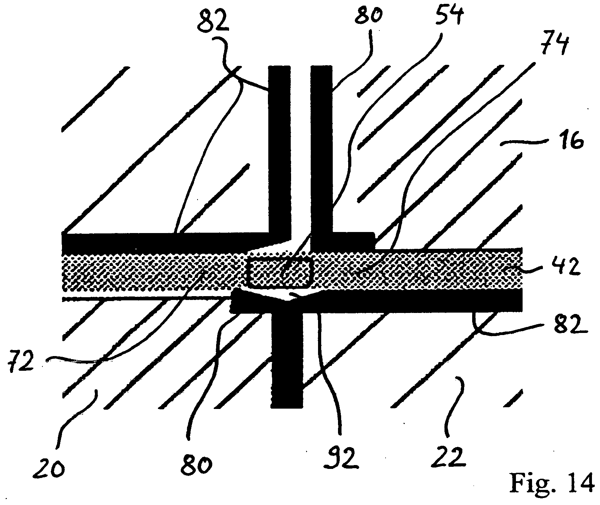

Figur 14 lässt eine weitere vorteilhafte Ausgestaltung erkennen, die im Prinzip in Verbindung mit sämtlichen vorgenannten Ausführungsformen realisiert werden kann. Dabei ist der untere, an die Trennlinie 54 angrenzende Bereich der Keramikbeschichtung 80, 82 oder Plattierung mit einer Vertiefung 92 versehen.

Die Vertiefung 92 kann durch überhöht dargestelltes Anschleifen der Oberfläche der elektrischen Isolierung hergestellt sein. Die Abschirmung sollte etwas schräg angeschliffen werden, z. B. in einem Größenbereich von 1/100 mm bis 5/100 mm. Der Beginn der Vertiefung 92 stellt das Ende der Gutseite 72 dar. Durch die Vertiefung 92 wird erreicht, dass der Wärmeübergang im Bereich der Vertiefung 92 schlechter als in den anderen Bereichen ist. Durch die Werkzeugkühlung wird dem Bauteil 42 nämlich Wärme entzogen. Da im Bereich der Vertiefung weniger Wärme entzogen wird, kann die Lage der Schmelze exakt vorgegeben werden. Ein Wandern der Trennlinie 54 wird damit verhindert. Dies hat zur Folge, dass die Kontur an der Gutseite 72wesentlich gradliniger ist, da der Schmelzbereich nicht mehr so stark zwischen den Elektroden 16, 20 wandert.

Für die dargestellten Anordnungen von Elektroden und Auflagern sind folgende Varianten mit zwei Elektroden und zwei Auflager oder drei Elektroden und einem Innenstück denkbar.

| | | |
|---|---|---|
| a) | Oberseite: | Elektrode - Auflager |
| | Unterseite: | Auflager - Elektrode |
| | | |
| b) | Oberseite: | Auflager - Elektrode |
| | Unterseite: | Elektrode - Auflager |
| | | |
| c) | Oberseite: | Elektrode - Elektrode |
| | Unterseite: | Auflager - Auflager |
| | | |
| d) | Oberseite: | Auflager - Auflager |
| | Unterseite | Elektrode - Elektrode |
| | | |
| e) | Oberseite: | Elektrode - Auflager |
| | Unterseite: | Elektrode - Elektrode |
| f) | Oberseite: | Elektrode - Elektrode |
| | Unterseite: | Elektrode - Auflager |
| | | |
| g) | Oberseite: | Auflager - Elektrode |
| | Unterseite: | Elektrode - Elektrode |
| | | |
| h) | Oberseite: | Elektrode - Elektrode |
| | Unterseite: | Auflager - Elektrode |

Die oben beschriebene Beschichtung mit Keramikmaterial kann beispielsweise unter Verwendung von Aluminiumoxid, Siliciumnitrit oder Titandioxid erfolgen,

Wesentlich ist, dass das Beschichtungsmaterial elektrisch isolierend ist, um ein Verschweißen mit dem Bauteil 42 zu verhindern. Zudem sollte es thermisch gut leitend sein, um die Elektrodenkühlung weiterzuleiten. Weiterhin soll keine Affinität zur Metallschmelze vorhanden sein, um ein Anhaften zu vermeiden. Das Beschichtungsmaterial muss einen höheren Schmelzpunkt als die Metallschmelze haben. Die Keramikbeschichtung 80, 82 kann beispielsweise durch thermisches Plasmaspritzen mit einer Schichtdicke vorzugsweise bis zu 150 µm erfolgen, wobei im Bereich der nur teilweise beschichteten Elektrodenauflagefläche der beschichtete Bereich, in der Höhe der Beschichtung abzutragen ist, um eine glatte Oberfläche zu erhalten. Das thermische Plasmaspritzen hat den Vorteil einer geringen Beschichtungstemperatur. was zu einem verringerten Verzug der Elektroden führt. Zudem sind größere Schichtdicken realisierbar, so dass die Elektroden unempfindlicher gegen Beschädigung sind.

Möglich ist auch eine PVD-Beschichtung (Physikalische GasphasenAbscheidung) mit einer Schichtdicke bis etwa 5 µm. Diese derart dünne Beschichtung erfordert keinen vorherigen Abtrag für das Schichtvolumen. Eine PVD-Beschichtung weist eine gute Schichthaftung auf, hat aber den Nachteil einer höheren Beschichtungstemperatur, so dass die Elektroden empfindlicher gegen Verzug sind.

Als Elektrodenmaterial, deren Zugfestigkeit die von hochlegierten Kaltarbeitsstellen teilweise überschreiten, so eignen sich insbesondere CuBe₂ mit einer Zugfestigkeit von 1.450 Newton pro mm² oder CuCoBe.

In Verbindung mit den oben beschriebenen Ausführungsformen ist eine weitere Steuerung der Schmelze denkbar, um die Schmelze zur Schrottseite 74 hin anzuziehen. Dies kann durch prozesseigene Magnetfelder der Elektroden oder durch externe Magnetfelder ggf. unter Einsatz von Feldformern erfolgen. Der Anziehungseffekt von Schmelze zur Elektrode ist vom Strom abhängig. Je größer der Strom eingestellt wird, desto größer ist der Anziehungseffekt. Dennoch wird durch großmagnetischen Druck unter Umständen ein Teil der Schmelze aus dem Werkzeug heraus katapultiert. Vorteilhaft ist es daher, den Trennspalt 52 nach unten zeigend einzubauen. Der Funkenflug kann dann abgeschirmt und aufgefangen werden. Dies kann ggf. durch Druckluft unterstützt werden. Besonders vorteilhaft ist die Variante mit geschossenem Trennspalt (Fig. 11). Hierbei verlässt kein Funkenflug das Werkzeug. Neben der Kühlung der Elektroden 16, 20 ist auch eine Kühlung der Auflager 18, 22 denkbar und unter Umständen sinnvoll. Als Kühlmaterial eignet sich beispielsweise eine Wasserkühlung.

**Bezugszeichenliste**

| | | | |
|---|---|---|---|
| 10 | Trennvorrichtung | 56 | erster Rand |
| 12 | erste Werkzeugkomponente | 58 | zweiter Rand |
| 14 | zweite Werkzeugkomponente | | |
| 16 | erste Elektrode | 60 | Stromeinleitstelle |
| 18 | erste Auflage | 62 | Stromableitstelle |
| | | 64 | Abschnitt |
| 20 | zweite Elektrode | | |
| 22 | zweite Auflage | 70 | Trennkante |
| 24 | erster Werkzeugträger | 72 | Gutseite |
| 26 | erste Isolierung | 74 | Schrottseite |
| 28 | zweite Isolierung | 80, 82 | Beschichtung, z. B. Keramik |
| 30 | zweiter Werkzeugträger | 84 | Kohlebeschichtung |
| 32 | erste Leitung | 86 | Platte |
| 34 | Stromquelle | 90 | Isolierpapier |
| 36 | zweite Leitung | 92 | Vertiefung |
| 38 | erster Kühlkanal | B | Breite |
| | | E | lokale Ebene |
| 40 | zweiter Kühlkanal | F | Spannkraft |
| 42 | Bauteil | I | elektrischer Strom |
| 48 | erste Stirnseite | P | Punkt |
| | | R1, R2 | Halbraum |
| 50 | zweite Stirnseite | S | Strompfad |
| 52 | Trennspalt | U | Spannung |
| 54 | Trennlinie | | |

## Patentansprüche

1. Verfahren zum Trennen eines Bauteils (42) entlang einer Trennlinie (54), mit den Schritten:
(a) Anordnen des Bauteils (42) und mindestens einer ersten Elektrode (16) in Kontakt zueinander, so dass das Bauteil (42) von einer ersten Seite entlang einer Trennlinie (54) in elektrisch leitendem Kontakt zu der mindestens einen ersten Elektrode (16) steht, und Anordnen des Bauteils (42) und mindestens eine zweite Elektrode (20) in Kontakt zueinander, so dass das Bauteil (42) von einer zweiten Seite entlang der Trennlinie (54) in elektrisch leitendem Kontakt zu der mindestens zweiten Elektrode (20) steht,
(b) Leiten eines elektrischen Stroms von der mindestens einen ersten Elektrode (16) durch das Bauteil (42) in die mindestens eine zweite Elektrode (20), so dass das Bauteil (42) entlang der Trennlinie (54) schmilzt und getrennt wird, und
(c) Durchströmen der Elektroden (16, 20) mit Kühlmittel, **gekennzeichnet durch** Führen des elektrischen Stroms aus mindestens einer der Elektroden (16, 20) über eine an eine elektrisch isolierte Kante (90) der Elektrode (16, 20) angrenzende, elektrisch leitende Anlagefläche der Elektrode (16, 20) in das Bauteil (42) hinein und **durch** die Trennlinie (54) hindurch an mindestens einer weiteren elektrisch isolierten Kante (90) mindestens einer weiteren Elektrode (16, 20) vorbei in die mindestens eine jeweils an eine solche elektrisch isolierte Kante angrenzende, elektrisch leitende Anlagefläche der weiteren Elektroden (16, 20) hinein.

2. Verfahren nach Anspruch 1, **dadurch gekennzeichnet, dass** das konduktive Trennen im Anschluss an ein Umformen des Bauteils (42) in demselben Werkzeug und/oder derselben Umformpresse erfolgt.

3. Verfahren nach Anspruch 2, **dadurch gekennzeichnet, dass** das pressgehärtete, zu trennende Bauteil eine AlSi (Aluminium-Silicium)-Beschichtung oder eine organische Beschichtung aufweist.

4. Verfahren nach einem der vorhergehenden Ansprüche, **dadurch gekennzeichnet, dass** der elektrische Strom (I)
- an zumindest einer Stromeinleitstelle (60) in die mindestens eine erste Elektrode (16) eingeleitet und
- an zumindest einer Stromableitstelle (62) aus der mindestens einen zweiten Elektrode (20) abgeleitet wird,
- wobei die Stromeinleitstelle (60) und die Stromableitstelle (62) so gewählt werden, dass das Bauteil (42) sich entlang der Trennlinie (54) so inhomogen erwärmt, dass es an zumindest einer Stelle an der Trennlinie (54) zuerst schmilzt.

5. Verfahren nach einem der vorhergehenden Ansprüche, **dadurch gekennzeichnet, dass** die Stromeinleitstelle (60) und die Stromableitstelle (62) so gewählt werden, dass der ohmsche und/oder komplexe Widerstand (Z) des längsten Strompfades (S) von der Stromeinleitstelle (60) zur Stromableitstelle (62) größer ist, als der ohmsche und/oder komplexe Widerstand (Z) des kürzesten Strompfades (S) von der Stromleitstelle (60) zur Stromableitstelle (62).

6. Verfahren nach einem der vorhergehenden Ansprüche, **dadurch gekennzeichnet, dass** die ersten und zweiten Elektroden (16, 20) während des Trennvorganges der Trennlinie (54) folgend aufeinander zu bewegt werden.

7. Verfahren nach einem der vorhergehenden Ansprüche, **dadurch gekennzeichnet, dass** als Bauteile (42) kaltumgeformte Bauteile (42) aus hüchstfestem Stahl, titanhaltige Werkstoffe oder Sandwich-Verbundtelle mit zwei oder mehr flächig übereinander liegenden Lagen aus wenigstens einem elektrisch leitfähigen Material ausgewählt werden.

8. Trennvorrichtung (10) für ein entlang einer Trennlinie (54) zu trennendes Bauteil (42) mit:
(i) mindestens einer ersten Elektrode (16), die derart in elektrisch leitendem Kontakt zu einem Bauteil (42) bringbar ist, dass sich die mindestens eine erste Elektrode (16) an einer ersten Seite entlang der Trennlinie (54) erstreckt, und
(ii) mindestens einer zweiten Elektrode (20), die derart in elektrisch leitendem Kontakt zu einem Bauteil (42) bringbar ist, dass sich die mindestens eine zweite Elektrode (20) an einer zweiten, der ersten Seite bezüglich der Trennlinie (54) gegenüberliegenden Seite entlang der Trennlinie (54) erstreckt; wobei
(iii) die erste Elektrode (16) gegenüber der mindestens einer zweiten Elektrode (20) elektrisch isoliert Ist und
(iv) die mindestens eine erste Elektrode (16) und die mindestens eine zweite Elektrode (20) an eine Stromquelle, (34) anschließbar sind, so dass das Bauteil (42) durch Leiten eines elektrischen Stroms von der mindestens einen ersten Elektrode (16) durch das Bauteil (42) in die mindestens eine zweite Elektrode (20) entlang der Trennlinie (54) trennbar ist,
wobei die Elektroden (16, 20) Kühlkanäle zum Durchleiten von Kühlmittel haben, **dadurch gekennzeichnet, dass** die an die Trennlinie (54) angrenzenden Kanten der Elektroden (16, 20) aus elektrisch isolierendem Material gebildet sind, so dass der durch die Trennlinie (54) fließende elektrische Strom durch das Bauteil (42) an den Kanten vorbei über die jeweils daran angrenzenden elektrisch leitenden Anlageflächen der Elektroden (16, 20) an dem Bauteil in die oder an der Elektrode (16, 20) hinein oder aus der Elektrode (16, 20) hinaus geführt wird.

9. Trennvorrichtung (10) nach Anspruch 8, **dadurch gekennzeichnet, dass** benachbart zu den Elektroden (16, 20) mindestens eine Auflage (18, 22) zur Auflage auf dem Bauteil (42) als Gegenlager zu einer zugeordneten Elektrode (16, 20) angeordnet ist, wobei die zur Auflage auf dem Bauteil (42) vorgesehene Auflagefläche und die an eine Elektrode (16, 20) direkt angrenzende oder durch einen Trennspalt (52) beabstandete Stirnfläche der mindestens einen Auflage (18, 22) mindestens teilweise und an der Anlagekante zum Bauteil (42) vollständig elektrisch isoliert ist.

10. Trennvorrichtung (10) nach einem der Ansprüche 8 oder 9, **dadurch gekennzeichnet, dass** Elektroden (16,20) partiell und die Auflager (18, 22) partiell oder vollständig mit einer elektrisch isolierenden Beschichtung oder Auflage mit geringer Affinität zur Metallschmelze versehen sind.

11. Trennvorrichtung (10) nach einem der Ansprüche 8 bis 10, **dadurch gekennzeichnet, dass** mindestens eine Elektrode (16, 20) elektrisch isolierend in eine Vertiefung einer Auflage (18, 22) eingebaut ist und zusammen mit der Auflage (18, 22) ein Werkzeug bildet.

12. Trennvorrichtung (10) nach einem der Ansprüche 8 bis 9, **dadurch gekennzeichnet, dass** die Trennvorrichtung (10) in eine Umformpresse so eingebaut ist, dass direkt im Anschluss an ein Umformen eines Bauteils (42) ein konduktives Trennen des Bauteils (42) in demselben Werkzeug und/oder derselben Umformpresse erfolgen kann.

13. Trennvorrichtung (10) nach einem der Ansprüche 8 bis 10, **dadurch gekennzeichnet, dass**
- eine erste Werkzeugkomponente (12) mit der mindestens einen ersten Elektrode (16) und mit mindestens einer ersten Auflage (18), die seitlich benachbart zur ersten Elektrode (16) angeordnet ist, und
- eine zweite Werkzeugkomponente (14) mit der mindestens einen zweiten Elektrode (20) und mindestens einer zweiten Auflage (22). die seitlich benachbart zur zweiten Elektrode (20) angeordnet ist, vorgesehen ist,
- wobei die erste Werkzeugkomponente (12) und die zweite Werkzeugkomponente (14) so zueinander bewegbar gelagert ist, dass das Bauteil (42) zwischen der mindestens einen ersten Elektrode (16) und der mindestens einen zweiten Auflage (22) und zwischen der mindestens einen zweiten Elektrode (20) und der mindestens einen ersten Auflage (18) einspannbar ist.

14. Trennvorrichtung (10) nach einem der Ansprüche 8 bis 13, **gekennzeichnet durch** einen Antrieb, der ausgebildet ist zum Bewegen der mindestens einen ersten Elektrode (16) und/oder der ersten Werkzeugkomponente (12) relativ zu der mindestens einen zweiten Elektrode (20) und/oder der zweiten Werkzeugkomponente (14), so dass das Bauteil (42) zwischen die erste Werkzeugkomponente (12) und die zweite Werkzeugkomponente (14) spannbar ist.

## Claims

1. Method for separating, a component (42) along a separating line (54), comprising the steps of:
(a) arranging the component (42) and at least one first electrode (16) such that they are in contact with one another, so that the component (42) is in electrically conductive contact with the at least one first electrode (16) on a first side along a separating line (54), and arranging the component (42) and at least one second electrode (20) such that they are in contact with one another, so that the component (42) is in electrically conductive contact with the at least one second electrode (20) on a second side along the separating line (54),
(b) passing an electric current from the at least one first electrode (16), through the component (42), into the at least one second electrode (20), so that the component (42) melts and is separated along the separating line (54), and
(c) coolant flowing through the electrodes (16, 20), **characterized by** conducting the electric current from at least one of the electrodes (16, 20), via an electrically conductive bearing surface of the electrode (16, 20), which bearing surface adjoins an electrically insulated edge (90) of the electrode (16, 20), into the component (42) and through the separating line (54), past at least one further electrically insulated edge (90) of at least one further electrode (16, 20), into the at least one electrically conductive bearing surface of the further electrodes (16, 20), which bearing surface respectively adjoins an electrically insulated edge of this kind.

2. Method according to Claim 1, **characterized in that** the conductive separation takes place following forming of the component (42) in the same die and/or the same forming press.

3. Method according to Claim 2, **characterized in that** the press-hardened component which is to be separated has an AlSi (aluminium silicon) coating, or an organic coating.

4. Method according to one of the preceding claims, **characterized in that** the electric current (I)
- is introduced into the at least one first electrode (16) at at least one current introduction point (60), and
- is discharged from the at least one second electrode (20) at at least one current discharge point (62),
- wherein the current introduction point (60) and the current discharge point (62) are selected such that the component (42) heats up along the separating line (54) in such an inhomogeneous manner that it initially melts at at least one point on the separating line (54).

5. Method according to one of the preceding claims, **characterized in that** the current introduction point (60) and the current discharge point (62) are selected such that the non-reactive and/or complex resistance (Z) of the longest current path (S) from the current introduction point (60) to the current discharge point (62) is greater than the non-reactive and/or complex resistance (Z) of the shortest current path (S) from the current introduction point (60) to the current discharge point (62).

6. Method according to one of the preceding claims, **characterized in that** the first and second electrodes (16, 20) are moved towards one another in a manner following the separating line (54) during the separating process.

7. Method according to one of the preceding claims, **characterized in that** the components (42) selected are cold-formed components (42) which are composed of extremely high-strength steel, titanium-containing materials or sandwich composite parts with two or more layers which lie flat one on the other and are composed of at least one electrically conductive material.

8. Separating apparatus (10) for a component (42) which is to be separated along a separating line (54), comprising:
(i) at least one first electrode (16) which can be brought into electrically conductive contact with a component (42) in such a way that the at least one first electrode (16) extends along the separating line (54) on a first side, and
(ii) at least one second electrode (20) which can be brought into electrically conductive contact with a component (42) in such a way that the at least one second electrode (20) extends along the separating line (54) on a second side which is opposite the first side with respect to the separating line (54); wherein
(iii) the first electrode (16) is electrically insulated from the at least one second electrode (20), and
(iv) the at least one first electrode (16) and the at least one second electrode (20) can be connected to a current source (34), so that the component (42) can be separated along the separating line (54) by passing an electric current from the at least one first electrode (16), through the component (42), into the at least one second electrode (20),
wherein the electrodes (16, 20) have cooling ducts for coolant to pass through, **characterized in that** the edges of the electrodes (16, 20), which edges adjoin the separating line (54), are formed from electrically insulating material, so that the electric current flowing through the separating line (54) is conducted through the component (42), past the edges, via the electrically conductive bearing surfaces of the electrodes (16, 20) on the component, which bearing surfaces respectively adjoin said edges, into the or to the electrode (16, 20) or out of the electrode (16, 20).

9. Separating apparatus (10) according to Claim 8, **characterized in that** at least one support (18, 22) for resting on the component (42) in the form of a mating bearing to an associated electrode (16, 20) is arranged adjacent to the electrodes (16, 20), wherein the support surface, which is provided for resting on the component (42), and the end face of the at least one support (18, 22), which end face directly on an electrode (16, 20) or is spaced apart by a separating gap (52), is at least partially and, at the bearing edge in relation to the component (42), fully electrically insulated.

10. Separating apparatus (10) according to either of Claims 8 and 9, **characterized in that** electrodes (16, 20) are partially and the supports (18, 22) are partially or completely provided with an electrically insulating coating or support with low affinity for metal melts.

11. Separating apparatus (10) according to one of Claims 8 to 10, **characterized in that** at least one electrode (16, 20) is installed into a recess in a support (18, 22) in an electrically insulating manner and forms a die together with the support (18, 22).

12. Separating apparatus (10) according to either of Claims 8 and 9, **characterized in that** the separating apparatus (10) is installed in a forming press such that the component (42) can be conductively separated in the same die and/or the same forming press directly following forming of a component (42).

13. Separating apparatus (10) according to one of Claims 8 to 10, **characterized in that**
- a first die component (12) having the at least one first electrode (16) and having at least one first support (18) which is arranged laterally adjacent to the first electrode (16) is provided, and
- a second die component (14) having the at least one second electrode (20) and at least one second support (22) which is arranged laterally adjacent to the second electrode (20) is provided,
- wherein the first die component (12) and the second die component (14) are mounted such that they can be moved in relation to one another such that the component (42) can be clamped between the at least one first electrode (16) and the at least one second support (22) and between the at least one second electrode (20) and the at least one first support (18).

14. Separating apparatus (10) according to one of Claims 8 to 13, **characterized by** a drive which is designed to move the at least one first electrode (16) and/or the first die component (12) relative to the at least one second electrode (20) and/or the second die component (14), so that the component (42) can be clamped between the first die component (12) and the second die component (14).

## Revendications

1. Procédé de séparation d'un élément structural (42) le long d'une ligne de séparation (54), comprenant les étapes suivantes:
a) mise en contact mutuel de l'élément structural (42) et d'au moins une première électrode (16) de telle sorte que l'élément structural (42) se trouve en contact électriquement conducteur avec l'au moins une première électrode (16) par un premier côté le long d'une ligne de séparation (54), et mise en contact mutuel de l'élément structural (42) et d'au moins une deuxième électrode (20) de sorte que l'élément structural (42) se trouve en contact électriquement conducteur avec l'au moins une deuxième électrode (20) par un deuxième côté le long de la ligne de séparation (54),
b) conduction d'un courant électrique depuis l'au moins une première électrode (16) à travers l'élément structural (42) dans l'au moins une deuxième électrode (20), de sorte que l'élément structural (42) fonde le long de la ligne de séparation (54) et soit séparé, et
c) mise en circulation à travers les électrodes (16, 20) d'un réfrigérant, **caractérisé par** le guidage du courant électrique depuis au moins l'une des électrodes (16, 20) à l'intérieur de l'élément structural (42) par le biais d'une surface d'appui de l'électrode (16, 20) électriquement conductrice et juxtaposée à un bord (90) électriquement isolé de l'électrode (16, 20), puis à travers la ligne de séparation (54), en passant par au moins un bord (90) électriquement isolé supplémentaire d'une autre électrode (16, 20), dans l'au moins une surface d'appui électriquement conductrice, respectivement juxtaposée à un tel bord électriquement isolé, de l'autre électrode (16, 20).

2. Procédé selon la revendication 1, **caractérisé en ce que** la séparation conductrice est effectuée après un façonnage de l'élément structural (42) dans le même outil et/ou de celui-ci presse de façonnage.

3. Procédé selon la revendication 2, **caractérisé en ce que** l'élément structural thermofaçonné à séparer possède un revêtement en AlSi (aluminium-silicium) ou un revêtement organique.

4. Procédé selon l'une des revendications précédentes, **caractérisé en ce que** le courant électrique (I)
- est injecté au niveau d'au moins un point d'injection de courant (60) dans l'au moins une première électrode (16) et
- est dérivé au niveau d'au moins un point de dérivation de courant (62), hors de l'au moins une deuxième électrode (20),
- le point d'injection de courant (60) et le point de dérivation de courant (62) étant choisis de telle sorte que l'élément structural (42) s'échauffe de manière non homogène le long de la ligne de séparation (54) de sorte qu'il fond d'abord en au moins un point sur la ligne de séparation (54).

5. Procédé selon l'une des revendications précédentes, **caractérisé en ce que** le point d'injection de courant (60) et le point de dérivation de courant (62) sont choisis de telle sorte que la résistance ohmique et/ou complexe (Z) du trajet de courant (S) le plus long du point d'injection de courant (60) au point de dérivation de courant (62) est supérieure à la résistance ohmique et/ou complexe (Z) du trajet de courant (S) le plus court du point d'injection de courant (60) au point de dérivation de courant (62).

6. Procédé selon l'une des revendications précédentes, **caractérisé en ce que** les première et deuxième électrodes (16, 20) sont déplacées l'une sur l'autre en suivant la ligne de séparation (54) pendant l'opération de séparation.

7. Procédé selon l'une des revendications précédentes, **caractérisé en ce que** les éléments structuraux (42) choisis sont des éléments structuraux (42) façonnés à froid en acier à haute résistance, en matériaux contenant du titane ou des pièces composites en sandwich comprenant deux couches ou plus superposées à plat en au moins un matériau électriquement conducteur.

8. Dispositif de séparation (10) pour un élément structural (42) à séparer le long d'une ligne de séparation (54), comprenant:
i) au moins une première électrode (16) qui peut être mise en contact électriquement conducteur avec un élément structural (42) de telle sorte que l'au moins une première électrode (16) s'étend sur un premier côté le long de la ligne de séparation (54), et
ii) au moins une deuxième électrode (20) qui peut être mise en contact électriquement conducteur avec un élément structural (42) de telle sorte que l'au moins une deuxième électrode (20) s'étend le long de la ligne de séparation (54) sur un deuxième côté, à l'opposé du premier côté en référence à la ligne de séparation (54);
iii) la première électrode (16) étant isolée électriquement par rapport à l'au moins une deuxième électrode (20), et
iv) l'au moins une première électrode (16) et l'au moins une deuxième électrode (20) pouvant être raccordées à une source de courant (34) de telle sorte que l'élément structural (42) peut être séparé le long de la ligne de séparation (54) par conduction d'un courant électrique depuis l'au moins une première électrode (16), à travers l'élément structural (42) dans l'au moins une deuxième électrode (20),
les électrodes (16, 20) possédant des canaux de refroidissement servant au passage d'un réfrigérant, **caractérisé en ce que** les bords des électrodes (16, 20) juxtaposés à la ligne de séparation (54) sont constitués d'un matériau électriquement isolant, de sorte que le courant électrique qui circule à travers la ligne de séparation (54) soit guidé à travers l'élément structural (42) en passant par les bords dans par le biais des surfaces d'appui électriquement conductrices des électrodes (16, 20) respectivement juxtaposées à ceux-ci au niveau de l'élément structural vers l'intérieur de ou sur l'électrode (16, 20) ou hors de l'électrode (16, 20).

9. Dispositif de séparation (10) selon la revendication 8, **caractérisé en ce qu'**à côté des électrodes (16, 20) est disposé au moins un support (18, 22) destiné à venir en appui sur l'élément structural (42) pour faire office de palier support pour une électrode (16, 20) associée, la surface d'appui conçue pour venir en appui sur l'élément structural (42) et la surface frontale de l'au moins un support (18, 22) directement au niveau d'une électrode (16, 20) ou espacée par un interstice de séparation (52) étant au moins partiellement isolée électriquement et entièrement au niveau du bord d'appui sur l'élément structural (42).

10. Dispositif de séparation (10) selon l'une des revendications 8 ou 9, **caractérisé en ce que** les électrodes (16, 20) possède partiellement et les supports (18, 22) partiellement ou entièrement avec un revêtement électriquement isolant ou une couche ayant une faible affinité avec un bain de fusion.

11. Dispositif de séparation (10) selon l'une des revendications 8 à 10, **caractérisé en ce que** l'au moins une électrode (16, 20) est montée de manière électriquement isolante dans un enfoncement d'un support (18, 22) et, en association avec le support (18, 22), forme un outil.

12. Dispositif de séparation (10) selon l'une des revendications 8 à 9, **caractérisé en ce que** le dispositif de séparation (10) est monté dans une presse de façonnage de telle sorte qu'une séparation conductrice de l'élément structural (42) peut être effectuée dans le même outil et/ou la même presse de façonnage directement à la suite d'un façonnage d'un élément structural (42).

13. Dispositif de séparation (10) selon l'une des revendications 8 à 10, **caractérisé en ce qu'**il existe
- un premier composant d'outil (12) comprenant l'au moins une première électrode (16) et comprenant au moins un premier support (18), lequel est disposé latéralement à côté de la première électrode (16), et
- un deuxième composant d'outil (14) comprenant l'au moins une deuxième électrode (20) et au moins un deuxième support (22), lequel est disposé latéralement à côté de la deuxième électrode (20),
- le premier composant d'outil (12) et le deuxième composant d'outil (14) étant disposés mutuellement mobiles de telle sorte que l'élément structural (42) peut être serré entre l'au moins une première électrode (16) et l'au moins un deuxième support (22) et entre l'au moins une deuxième électrode (20) et l'au moins un premier support (18).

14. Dispositif de séparation (10) selon l'une des revendications 8 à 13, **caractérisé par** un mécanisme d'entraînement qui est configuré pour déplacer l'au moins une première électrode (16) et/ou le premier composant d'outil (12) par rapport à l'au moins une deuxième électrode (20) et/ou le deuxième composant d'outil (14), de sorte que l'élément structural (42) peut être serré entre le premier composant d'outil (12) et le deuxième composant d'outil (14).
